# EUROPÄISCHE PATENTANMELDUNG

(11) **EP 1 184 400 A1**
(43) Veröffentlichungstag der Anmeldung: **06.03.2002**
(21) Anmeldenummer: 01119631.8
(22) Anmeldetag: 21.08.2001
(51) Int. Cl.: C08G 18/80, C08G 18/08, D06M 15/568, C08G 18/70

(54) **Mit Pyrazol oder Pyrazolderivaten blockierte aromatische Polyisocyanate, Verfahren zu deren Herstellung und Verwendung**

(30) Priorität: 31.08.2000 DE 10042738
(71) Anmelder: BAYER AG, 51368 Leverkusen (DE)
(72) Erfinder: Gerle, Michael, Dr., 50127 Bergheim (DE); Ehlert, Hans-Albert, Singapore 629844 (SG); König, Eberhard, Dr., 51375 Leverkusen (DE)

(57) **Zusammenfassung**

Mit 1-H-Pyrazol oder dessen Derivaten blockierte NCO-haltige Umsetzungsprodukte aus
- A): aromatischen Polyisocyanaten,
- B): NCO-reaktiven Verbindungen enthaltend Sulfonat und/oder tert.-Aminogruppen sowie
- C): gegebenenfalls weitere von B) verschiedene NCO-reaktive Verbindungen
werden zur Behandlung von Substraten, insbesondere Textilien, Papier oder Leder eingesetzt.

## Beschreibung

Die Erfindung betrifft mit Pyrazol oder Pyrazolderivaten blockierte aromatische Polyisocyanate, Verfahren zu deren Herstellung und deren Verwendung zur Behandlung von Textilien, Papier oder Leder.

Mit ionischen Gruppen oder Polyalkylenoxideinheiten modifizierte und damit hydrophilierte Isocyanate sind in Wasser dispergierbar, haben aber auf Grund der Reaktivität der Isocyanatgruppe nur eine begrenzte Stabilität in wässrigem Medium. So beschreibt beispielsweise die WO-A-99/10590 derartige zur Filzfreiausrüstung von Wolle geeignete Produkte mit einer maximalen Dispersionsstabilität von 24 Stunden.

Blockiert man dagegen die Isocyanatgruppen mit Verkappungsmitteln, wie sie beispielsweise in Houben-Weyl, Methoden der organischen Chemie, Bd. E 20, S. 1617-19 u. 1650-51, G. Thieme Verlag Stuttgart, 1987 oder in Ullmann's Encyclopedia of Industrial Chemistry, Fifth Edition, Vol. A 21, S. 674, VCH, 1992 beschrieben sind, so erhält man nach Wasserzugabe lagerstabile Dispersionen. Derartige Produkte werden häufig als Bindemittelkomponente zur Beschichtung von Metallen, Holz, Papier, Leder und Kunststoffen eingesetzt.

Aus EP-A-0 537 578 ist die Verwendung derartiger hydrophilierter blockierter Isocyanate zur Ausrüstung von Texilien bekannt. In US-A-4,834,764 wird über die Behandlung von Texilien mit einer Kombination von speziellen hydrophilierten blockierten Isocyanaten mit perfluoralkylhaltigen Polymeren berichtet.

Gemäß DE-A-44 33 437 können spezielle blockierte Isocyanate als Vernetzer von Druckpasten, die im Textildruck verwendet werden, eingesetzt werden.

Aus ökonomischen Gründen sollte die verwendete Blockierungsgruppe aus den blockierten Isocyanaten in den beschriebenen Anwendungen bei möglichst niedrigen Temperaturen wieder abspaltbar sein. Bei thermisch nicht sehr stark belastbaren Substraten wie Wolle ist dies sogar zwingend notwendig.

Blockierte Produkte mit niedrigen Deblockierungstemperaturen besitzen aber in Form ihrer wässrigen Dispersionen häufig eine unzureichende Verarbeitungszeit bzw. Lagerstabilität.

In US-A-4,008,247, GB-A-2 153 346, US-A-4,623,731, EP-A-0 500 495 wird die Verwendung von bestimmten Pyrazolderivaten als Blockierungsmittel beschrieben. In EP-A-0 159 117 werden mit Pyrazolderivaten blockierte Polyisocyanate als Bestandteil von Anstrichrezepturen verwendet. WO-A-97/12924 und EP-A-0 942 023 offenbaren mit Pyrazolderivaten blockierte Polyisocyanate, die durch eingebaute Ethylenoxidgruppen oder Hydroxycarbonsäuren hydrophiliert werden.

Derartige Produkte sind allerdings für Textilanwendungen, wie sie in EP-A-0 537 578 oder US-A-4,834,764 beschrieben sind, nicht geeignet, da die zur Hydrophilierung notwendige Menge an eingebauten Ethylenoxidgruppen zu einer permanenten Hydrophilie führt und damit zu einer nicht ausreichenden Hydrophobwirkung der Textilausrüstung. Ein weiterer Nachteil liegt in der guten Auswaschbarkeit solch hydrophiler Produkte. Auch die Verwendung von einbaufähigen Hydroxycarbonsäuren zur Hydrophilierung der blockierten Isocyanate liefert Produkte, die für Textilanwendungen nicht eingesetzt werden können, da sie nicht ausreichend mit anderen Rezepturbestandteilen kombinierbar sind. So müssen den Ausrüstungsflotten häufig noch methylolisierte Harnstoff- oder Melaminderivate zugesetzt werden können, die nur im sauren pH-Bereich gut wirksam sind. Auch andere gängige Flottenkomponenten, wie z.B. Flammschutzmittel oder als Weichmacher verwendete Aminosiliconemulsionen, erfordern in vielen Fällen, dass die Flotte auf einen sauren pH-Wert eingestellt wird. Mit Carbonsäuregruppen hydrophilierte Polyisocyanate sind jedoch auf Grund des relativ hohen pKₛ-Werts von Carbonsäuren im Sauren nicht stabil und führen dann zu Ausfällungen.

Ferner weisen die Produkte des Standes der Technik den Nachteil auf, dass ihre Herstellung meistens aufwendig ist. So müssen häufig hohe Mengen an externen Emulgatoren und hohe Scherkräfte zur Dispergierung der blockierten Polyisocyanate verwendet werden. Bei Produkten, die unter Verwendung von einbaufähigen ionischen Gruppen hydrophiliert werden, ist wegen der Empfindlichkeit der Isocyanatgruppen oft ein zweistufiges Verfahren nötig, bei dem zuerst die Blockierung des Isocyanats und erst dann der Einbau der ionischen Gruppen erfolgt.

Die Aufgabe der vorliegenden Erfindung bestand außerdem darin, auf einfachem Weg neue hydrophilierte blockierte Polyisocyanate bereitzustellen, die gleichzeitig eine hohe Reaktivität und eine gute Stabilität in Wasser besitzen. Außerdem sollten die Produkte eine möglichst geringe Hydrophilie bei gleichzeitig guter Wasserdispergierbarkeit und Stabilität der Dispersion gegen Säuren aufweisen.

Gegenstand der Erfindung sind mit 1-H-Pyrazol oder dessen Derivaten blockierte NCO-haltige Umsetzungsprodukte aus
A) aromatischen Polyisocyanaten,
B) NCO-reaktiven Verbindungen enthaltend Sulfonat und/oder tert.-Aminogruppen sowie
C) gegebenenfalls weitere von B) verschiedene NCO-reaktive Verbindungen.

Geeignete Polyisocyanate der Komponente A) sind beliebige aromatische Polyisocyanate oder Gemische davon mit einem mittleren, aus Isocyanatgehalt und Funktionalität bestimmten Molekulargewicht von 150 bis 5000, vorzugsweise 500 bis 2000 g/mol. Geeignet sind die aus der Polyurethanchemie an sich bekannten Isocyanate wie die isomeren Diphenylmethandiisocyanate sowie deren höheren Homologen, die durch Phosgenierung von Anilin/Formaldehyd-Kondensationsprodukten erhalten werden können, 2,4- und 2,6-Toluylendiisocyanat sowie deren technische Gemische, Triphenylmethantriisocyanate, (Alkyl-) Phenylendiisocyanate, Xylylendiisocyanate, Tetramethylxylylendiisocyanate, Naphthalin-1,5-diisocyanat, Diphenyldiisocyanate, Triisocyanatotriphenylthiophosphate. Ebenfalls geeignet sind die an sich bekannten Polyisocyanat-Folgeprodukte, z.B. die Di- bzw. Trimerisierungsprodukte der genannten Isocyanate mit Biuret-, Isocyanurat-, Uretdion-, Allophanat- und/oder Urethanstruktur.

Vorzugsweise handelt es sich bei den Polyisocyanaten A) um Isocyanatgruppen aufweisende Prepolymere, wie sie in an sich bekannter Weise durch Umsetzung von nieder- oder höhermolekularen Polyhydroxylverbindungen mit überschüssigen Mengen an Polyisocyanat oder auch mit einem großen Überschuss an Polyisocyanat und anschließender Entfernung des überschüssigen Polyisocyanates, z.B. durch Dünnschichtdestillation, erhalten werden können. Ganz besonders bevorzugt werden zur Synthese der Prepolymeren aromatische Polyisocyanate des Molekulargewichtsbereichs 150 - 300 eingesetzt. Die Herstellung der Prepolymeren erfolgt im allgemeinen bei 40 - 140°C, gegebenenfalls unter Mitverwendung von aus der Polyurethanchemie an sich bekannten Katalysatoren, wie beispielsweise metallorganischen Verbindungen. Bevorzugt sind beispielsweise Zinn-(II)-octoat, Dibutylzinn-(II)-diacetat, Dibutylzinn-(II)-dilaurat. Darüber hinaus können tertiäre Amine wie Triethylamin oder Diazabicyclooctan Verwendung als Katalysatoren finden.

Zur Herstellung derartiger Prepolymere eignen sich niedermolekulare Polyhydroxylverbindungen des Molekulargewichtsbereichs 60 - 300 g/mol, wie beispielsweise Ethylenglykol, 1,2-Propylenglykol, 1,3-Propylenglykol, 1,4-Butandiol, 1,6-Hexandiol, Neopentylglykol, 2-Ethyl-1,3-hexandiol, Glyzerin, Trimethylolpropan, Pentaerythrit, niedermolekulare Hydroxylgruppen aufweisende Ester derartiger Polyole mit Dicarbonsäuren oder niedermolekulare Ethoxylierungs- oder Propoxylierungsprodukte derartiger einfacher Polyole oder beliebige Gemische derartiger modifizierter oder nicht modifizierter Alkohole. Bevorzugt sind insbesondere NCO-Prepolymere aus Toluylendiisocyanat und Trimethylolpropan.

Als NCO-reaktive Verbindungen der Komponente B), die tert.-Amino-Gruppen enthalten, kommen beispielsweise in Frage:
B1) einwertige Alkohole, die wenigstens eine tert.-Amino-Gruppe enthalten. Geeignet sind beispielsweise alkoxylierte aliphatische, cycloaliphatische, aromatische und heterocyclische, sekundäre Amine mit einer OH-Funktion, z.B. N,N-Dimethylethanolamin, N,N-Diethylethanolamin, N,N-Dibutylethanolamin, ferner N,N-Dimethylisopropanolamin, N,N-Dimethylpropanolamin, N-Methyl-N-hydroxyethylanilin, N-Methyl-N-hydroxypropylanilin, N-Ethyl-N-hydroxyethylanilin, N-Butyl-N-hydroxyethylanilin, N-Hydroxyethylpiperidin, N-Hydroxyethylmorpholin, sowie deren polyalkoxylierte Derivate, wobei im Falle der polyalkoxylierten Produkte ihr mittleres Molekulargewicht 250 bis 5000 g/mol betragen kann. Beispiele sind polyalkoxyliertes N,N-Dimethylethanolamin, N,N-Diethylethanolamin und N,N-Dibutylethanolamin sowie polyalkoxyliertes N-Hydroxyethylmorpholin.
B2) Diole und höhere Alkohole, die wenigstens eine tert.-Amino-Gruppe enthalten. Geeignet sind beispielsweise bisalkoxylierte aliphatische, cycloaliphatische, aromatische und heterocyclische primäre Amine mit wenigstens zwei OH-Funktionen sowie trisalkoxylierter Ammoniak, z.B. N-Methyldiethanolamin, N-Ethyldiethanolamin N-Butyldiethanolamin, N-Lauryldiethanolamin, N-Stearyldiethanolamin, N-Oleyldiethanolamin, N-Cyclohexyldiethanolamin, N-Methyldiisopropanolamin, N-Cyclohexyldiethanolamin, N-Methyldiisopropanolamin, N-Cyclohexyldiethanolamin, N,N-Dihydroxyethylanilin, N,N-Dihydroxyethyl-m-toluidin, N,N-Dihydroxyethyl-p-toluidin, N,N-Dihydroxypropylnaphthylamin, N,N'-Dihydroxyethylpiperazin, Tris-[2-hydroxypropyl-(1)-amin], N,N'-Dimethyl-N,N'-bis-hydroxyethylhydrazin und N,N'-Dimethyl-N,N'-bishydroxypropylethylendiamin, Aminoalkohole, erhalten z.B. durch Hydrierung von Additionsprodukten von Alkylenoxyd und Acrylnitril an primäre Amine, z.B. N-Methyl-N-(3-aminopropyl)-ethanolamin, N-Cyclohexyl-N-(3-aminopropyl)-propanol-(2)-amin, N,N-Bis-(3-aminopropyl)-ethanolamin und N-(3-Aminopropyl)-diethanolamin, sowie deren polyalkoxylierte Derivate, wobei im Falle der polyalkoxylierten Produkte das mittlere als Zahlenmittel bestimmte Molekulargewicht 250 bis 5000 g/mol betragen kann. Beispiele sind polyalkoxyliertes N-Methyldiethanolamin, N-Ethyldiethanolamin und N-Butyldiethanolamin sowie polyalkoxyliertes N,N'-Dihydroxyethylpiperazin.
   Weiterhin geeignet sind Polyole, enthaltend tert.-Aminogruppen, die nicht durch Alkoxylierung von Aminen erhalten wurden.
B3) Weitere mögliche NCO-reaktive Verbindungen der Komponente B) die tert.-Aminogruppen enthalten sind Amine ohne OH-Gruppen. Bevorzugt sind dies aliphatische, cycloaliphatische, aromatische oder heterocyclische Amine wie z.B. N,N-Dimethylethylendiamin, 1-Diethylamino-4-aminopentan, α-Aminopyridin, 3-Amino-N-ethylcarbazol, N,N-Dimethyl-propylendiamin, N-Aminopropylpiperidin, N-Aminopropylmorpholin, N-Aminopropylethylenimin und 1,3-Bis-piperidino-2-aminopropan, insbesondere durch Hydrierung von Anlagerungsprodukten von Acrylnitril an primäre und sekundäre Amine, z.B. Bis-(3-aminopropyl)-methylamin, Bis-(3-aminopropyl)-cyclohexylamin, Bis-(3-aminopropyl)-anilin, Bis-(3-aminopropyl)-toluidin, Diaminocarbazol, Bis-(aminopropoxyethyl)-butylamin und Tris-(aminopropyl)-amin.

Bei diesen NCO-reaktiven Verbindungen können die Amino-Gruppen auch durch Umsetzung mit salzbildenden Mitteln, wie anorganischen und organischen Säuren sowie Verbindungen mit reaktiven Halogenatomen und den Estern starker Säuren neutralisiert bzw. quaterniert werden. Die Umsetzung kann vor oder nach der Reaktion der Komponente B) mit der Komponente A) erfolgen.

Zur Neutralisation können beispielsweise Salzsäure, Salpetersäure, Phosphorsäure, unterphosphorige Säure, Schwefelsäure, Amidosulfonsäure, Hydroxylaminmonosulfonsäure, Ameisensäure, Essigsäure, Glykolsäure oder Milchsäure eingesetzt werden.
Bevorzugt verwendet werden Essigsäure oder Milchsäure.

Zur Quaternierung können beispielsweise Chloressigsäure, Chloressigsäureethylester, Chloracetamid, Bromessigsäure, Bromessigsäureethylester, Bromacetamid, Methylchlorid, Ethylchlorid, Propylchloride, Butylchloride, Benzylchlorid, Ethylenchlorhydrin, Methylbromid, Ethylbromid, Propylbromide, Butylbromide, Dibrommethan, Ethylenbromhydrin, Methyliodid, Dimethylphosphit, Dimethylsulfat, Diethylsulfat, p-Toluolsulfonsäuremethylester verwendet werden.
Bevorzugt verwendet werden Methylchlorid oder Dimethylsulfat.

Als NCO-reaktive Verbindungen B) enthaltend Sulfonat-Gruppen sind beispielsweise solche zu nennen die durch Umsetzung von Sulfonsäuregruppen enthaltenden NCO-reaktiven Verbindungen mit anorganischen oder organischen Basen als Salzbildnern wie z.B. Natriumhydroxyd, Kaliumhydroxyd, Kaliumcarbonat, Natriumhydrogencarbonat, Ammoniak, sowie primären, sekundären oder tertiären Aminen erhältlich sind. Die Salzbildung kann vor oder nach Reaktion mit den NCO-Gruppen der Komponente A) erfolgen.

Als Sulfonsäuregruppen enthaltene Verbindungen kommen beispielsweise in Frage:
a) Hydroxy- und Carboxysulfonsäuren, wie 2-Hydroxyethansulfonsäure, Phenol-2-sulfonsäure, Phenol-3-sulfonsäure, Phenol-4-sulfonsäure, Phenol-2,4-disulfonsäure, Sulfoessigsäure, 2-Sulfobenzoesäure, 3-Sulfobenzoesäure, 4-Sulfobenzoesäure, 3,5-Disulfobenzoesäure, 2-Chlor-4-sulfobenzoesäure, 2-Hydroxy-5-sulfobenzoesäure, 1-Naphthol-4-sulfonsäure, 1-Naphthol-5-sulfonsäure, 2-Naphthol-8-sulfonsäure, 1-Naphthol-2-sulfonsäure, 2-Naphthol-6-sulfonsäure, 2-Naphthol-7-sulfonsäure, 2-Naphthol-6,8-disulfonsäure, 1-Naphthol-4,8-disulfonsäure, 1-Naphthol-4,7-disulfonsäure, 1-Naphthol-3,8-disulfonsäure, 2-Naphthol-3,6-disulfonsäure, 1-Naphthol-3,6-disulfonsäure, Chromotropsäure oder 3-Hydroxy-6-sulfo-2-naphthoesäure.
b) Aminosulfonsäuren, wie Amidosulfonsäure, Hydroxylaminsulfonsäure, Sulfanilsäure, N-Phenylaminomethansulfonsäure, 4,6-Dichloranilin-2-sulfonsäure, 1,3-Phenylendiamin-4,6-disulfonsäure, 2-Naphthylamin-1-sulfonsäure, 1-Naphthylamin-4-sulfonsäure, 1-Naphthylamin-5-sulfonsäure, 2-Naphthylamin-6-sulfonsäure, 2-Naphthylamin-8-sulfonsäure, 1-Naphthylamin-8-sulfonsäure, 1-Naphthylamin-3-sulfonsäure, 1-Naphthylamin-6-sulfonsäure, 2-Naphthylamin-6-sulfonsäure, 2-Naphthylamin-7-sulfonsäure, 1-Naphthylamin-7-sulfonsäure, 2-Naphthylamin-5,7-disulfonsäure, 2-Naphthylamin-6,8-disulfonsäure, 2-Naphthylamin-4,8-disulfonsäure, 1-Naphthylamin-4,8-disulfonsäure, 1-Naphthylamin-4,7-disulfonsäure, 1-Naphthylamin-3,8-disulfonsäure, 1-Naphthylamin-4,6-disulfonsäure, 1-Naphthylamin-3,7-disulfonsäure, 1-Naphthylamin-2,7-disulfonsäure, 2-Naphthylamin-3,6-disulfonsäure, 1-Naphthylamin-3,6-disulfonsäure, 1-Naphthylamin-4,6,8-trisulfonsäure, 2-Naphthylamin-3,6,8-trisulfonsäure, 1-Naphthylamin-3,6,8-trisulfonsäure, 4,4'-Di-(p-amino-benzoylamin)-diphenylhamstoff-3,3'-disulfonsäure, Phenylhydrazin-2,5-disulfonsäure, 2,3-Dimethyl-4-aminoazobenzol-4',5-disulfonsäure, 4'-Aminostilben-2,2'-disulfonsäure-(4-azo-4)-anisol, Carbazol-2,7-disulfonsäure, Taurin, Methyltaurin, Butyltaurin, 3-Aminobenzoesäure-5-sulfonsäure, 3-Aminotoluol-N-methansulfonsäure, 6-Nitro-1,3-dimethylbenzol-4-sulfaminsäure, 4,6-Diaminobenzol-1,3-disulfonsäure, 2,4-Diaminotoluol-5-sulfonsäure, 4,4'-Diaminodiphenyl-2,2'-disulfonsäure, 2-Aminophenol-4-sulfonsäure, 4,4'-Diaminodiphenylether-2-sulfonsäure, 2-Aminoanisol-N-methansulfonsäure, 2-Aminodiphenylaminsulfonsäure, 2-[4-(2-Hydroxyethyl)-piperazino]-ethansulfonsäure oder 3-[4-(2-Hydroxyethyl)-piperazino]-1-propansulfonsäure.

Gut geeignet sind weiterhin Umsetzungsprodukte von 2-Hydroxyethansulfonsäure oder ihren Salzen mit Polyaminoverbindungen mit 3 bis 10 Stickstoffatomen wie beispielsweise das durch Umsetzung von 2-Hydroxyethansulfonsäurenatriumsalz mit Ethylendiamin erhältliche Natriumsalz der Aminoethyl-2-aminoethansulfonsäure.

Weiterhin gut geeignete Verbindungen sind die Salze der schwefligen Säure, besonders Natriumhydrogensulfit.

Besondere bevorzugt ist die Klasse der Sulfonatdiole; geeignete Verbindungen dieser Klasse sind beispielsweise in DE-A 24 46 440 beschrieben. Sie entsprechen im allgemeinen der Formel 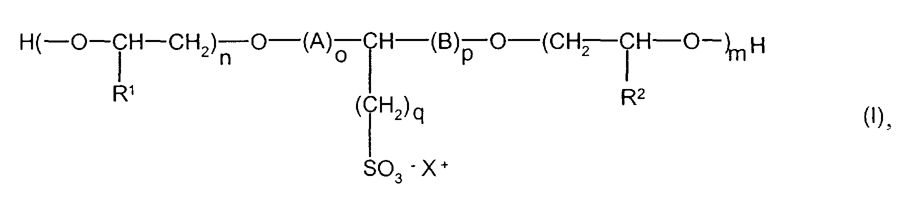 worin
- A und B: für gleiche oder verschiedene zweiwertige aliphatische Kohlenwasserstoffreste mit 1 bis 6 Kohlenstoffatomen stehen,
- R¹ und R²: unabhängig voneinander für Wasserstoff, einen aliphatischen Kohlenwasserstoffrest mit 1 bis 4 Kohlenstoffatomen oder einen Phenylrest stehen,
- X⁺: für ein Alkalimetallkation oder eine gegebenenfalls substituierte Ammoniumgruppe steht,
- n und m: unabhängig voneinander für Null oder Zahlen von 1 bis 30 stehen,
- o und p: für jeweils Null oder 1 stehen und
- q: für Null, 1 oder 2 steht.

Bevorzugte Verbindungen der Formel (I) entsprechen den Formeln 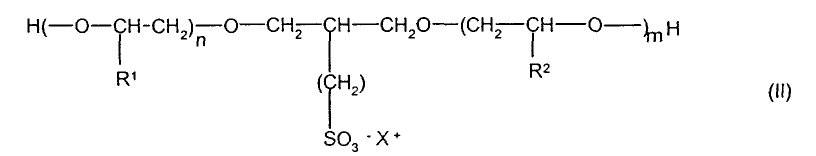 und 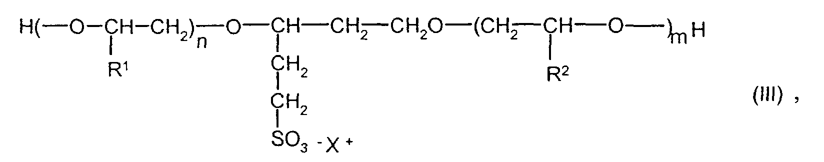 worin
- R¹ und R²: jeweils unabhängig voneinander Wasserstoff oder Methyl, und
- n und m: jeweils unabhängig voneinander Null oder Zahlen von 1 bis 3 bedeuten und
- X⁺: die Bedeutung wie in Formel (I) hat.

Besonders bevorzugt sind Sulfonatdiole der Formel 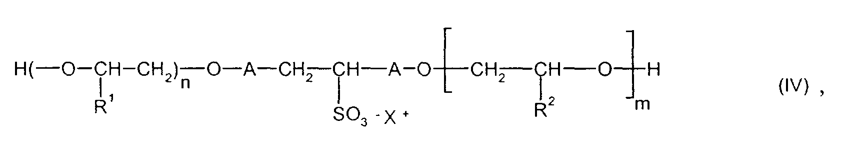 worin
- R¹, R²: unabhängig voneinander Wasserstoff oder Methyl,
- A: einen zweiwertigen aliphatischen C₁-C₄-Kohlenwasserstoffrest, vorzugsweise Methylen,
- X⁺: ein Alkalimetall-Kation oder eine Ammoniumgruppe und
- n und m: eine ganze Zahl von 1 bis 20 bedeuten.

Ganz besonders bevorzugt sind Sulfonatdiole der Formel (IV), worin R¹ = R² = CH₃ bedeutet.

Bevorzugte Kationen X⁺ umfassen Kalium-, Natrium- und Ammoniumionen, wobei der Ammonium-Stickstoff mit bis zu 4 organischen C₁-C₁₀-Resten substituiert sein kann, wobei anstelle zweier solcher Substituenten auch ein zweiwertiger 4- oder 5-gliedriger, gegebenenfalls Heteroatome (wie Sauerstoff, Stickstoff, Schwefel) enthaltender Rest treten kann, der zusammen mit dem zu X⁺ gehörenden Stickstoffatom einen Heterocyclus, beispielsweise einen Morpholin- oder Hexahydropyridin-Ring bildet.

Die Komponente B) wird bevorzugt in einer solchen Menge eingesetzt, dass die erfindungsgemäßen blockierten NCO-haltigen Umsetzungsprodukte einen Gehalt an ionischen Gruppen von 1 bis 100 Milliäquivalente pro 100 g blockiertem NCO-Umsetzungsprodukt enthalten.

Werden die Produkte für Anwendungen eingesetzt, bei denen eine zu hohe Hydrophilie eher nachteilig ist, so sollte der Gehalt ionischer Gruppen eher am unteren Ende der definierten Bandbreite liegen und beträgt vorzugsweise 2 bis 25 Milliäquivalente pro 100 g blockiertem Polyisocyanat.

Als weiterere von B) verschiedene NCO-reaktive Verbindungen ohne Sulfonat- und/oder tert.-Aminogruppen der Komponente C) können verwendet werden:

Ein- oder mehrwertige, insbesondere ein-, zwei- oder dreiwertige Polyetheralkohole mit einem als Zahlenmittel bestimmten mittleren Molekulargewicht von 500 bis 10000 g/mol. Geeignete Komponenten umfassen beispielsweise auf Monoolen, Diolen oder Triolen gestartete Poly-C₂-C₆-, vorzugsweise -C₂-C₃-alkylenether.

Als Starter können des weiteren auch ein- oder mehrwertige Amine verwendet werden.

Anstelle der Hydroxyl-Endgruppe können die Polyalkylenether auch Amino- oder Mercapto-Endgruppen tragen, die auf die dem Fachmann geläufige Weise hergestellt werden können.

Bevorzugt sind Polyalkylenethergruppen zu 50 bis 100 Gew.-% Ethylenoxideinheiten und neben diesen gegebenenfalls weitere Alkylenoxideinheiten, insbesondere Propylenoxideinheiten.

Besonders bevorzugt sind Ethylenoxid/Propylenoxid-Polyether, die durch nacheinander ablaufende Umsetzung des Startermoleküls mit Ethylenoxid bzw. Propylenoxid erhalten werden (sogenannte Blockpolyether). Eine anderen Möglichkeit ist, den Starter mit Ethylenoxid/Propylenoxid-Mischungen zur Reaktion zu bringen, wobei sogenannte statistische Polyether resultieren. Durch Kombination beider Möglichkeiten können auch Polyether mit Ethylenoxid- bzw. Propylenoxid-Blöcken und Ethylenoxid/Propylenoxid-Mischblöcken erhalten werden.

Gut bewährt hat sich auch die Verwendung von Propylenoxid-Polyethern bzw. Propylenoxid-Polyetheraminen (Jeffaminen) als Komponente C). Entsprechende blockierte NCO-Gruppen enthaltene Umsetzungsprodukte führen bei der Behandlung von Textilien zu guten hydrophoben und grifflichen Eigenschaften.

Die erfindungsgemäßen blockierten NCO-haltigen Umsetzungsprodukte weisen, bezogen auf blockiertes NCO-Umsetzungsprodukt vorzugsweise einen Gehalt an durch Polyethermonoalkohole, -amine oder -mercaptane eingebauten Polyalkylenethergruppen, berechnet als wiederkehrende Alkylenoxygruppen (O-Alkylen-)ₓ, von 3 bis 25 Gew.-% auf.

Als weitere NCO-reaktive Verbindungen der Komponente C) können Verwendung finden, Kettenverlängerungsmittel mit einem als Zahlenmittel bestimmten mittleren Molekulargewicht von 30 bis 499 g/mol. Zu nennen sind hier Polyole oder Polyamine, die pro Molekül vorzugsweise 2 bis 8, insbesondere 2 oder 3 Hydroxy- bzw. Aminogruppen, aufweisen. Als Polyole kommen vorzugsweise die folgenden in Frage:
(i) Alkandiole wie Ethylenglykol, Propylenglykol-1,3 und Propylenglykol-1,2, Butandiol-1,4, Pentandiol-1,5, 2,2-Dimethylpropandiol-1,3 und Hexandiol-1,6;
(ii) Etherdiole, die im Falle von Polyalkylenetherdiolen vorzugsweise 1 bis 4 wiederkehrende Alkylenoxygruppen enthalten, wie Diethylenglykol, Triethylenglykol oder 1,4-Phenylen-bis-(hydroxyethylether);
(iii) Esterdiole der Formeln HO-(C₂-C₆-Alkylen)-CO-O-(C₂-C₆-Alkylen)-OH und HO-(C₂-C₆-Alkylen)-O-CO-R-CO-O-(C₂-C₆-Alkylen)-OH,
worin
R einen Alkylen- bzw. Arylenrest mit 1 bis 10, vorzugsweise 2 bis 6 C-Atomen, bedeutet,
z.B. ε-Hydroxycapronsäure-δ-hydroxybutyl-ester, γ-Hydroxybuttersäure-ω-hydroxy-hexyl-ester, Adipinsäure-bis-(hydroxyethyl)ester, Terephthalsäurebis-(hydroxyethyl)-ester und α-Methyl-α-hydroxymethylpropionsäureneopentylglykolmonoester.

Weiterhin sind auch höherwertige Alkohole wie Glycerin, Trimethylolethan, -propan und -hexan sowie Pentaerythrit zu nennen.

Als Polyamine der Komponente C) kommen vorzugsweise aliphatische oder aromatische Diamine in Frage, beispielsweise Ethylendiamin, Propylendiamin-1,2 und -1,3, 1,4-Tetramethylendiamin, 1,6-Hexamethylendiamin, N,N'-Diisobutyl-1,6-hexamethylendiamin, 1,11-Undecamethylendiamin, Cyclohexan-1,3- und -1,4-diamin sowie deren Gemische, 1-Amino-3,3,5-trimethyl-5-aminomethylcyclohexan, 2,4- und 2,6-Hexahydrotoluylendiamin sowie deren Gemische, Perhydro-2,4'- und 4,4'-diaminodiphenylmethan und dessen 3,3'-Dimethylderivat und Bis-(3-aminopropyl)-methylamin; p-Xylylendiamin, Bisanthranilsäureester, 3,5- und 2,4-Diaminobenzoesäureester, estergruppenhaltige Diamine, sowie 3,3'-Dichlor-4,4'-diamino-diphenylmethan, Toluylendiamin, 4,4'-Diaminodiphenylmethan und 4,4'-Diaminodiphenyldisulfid. Als Diamine in diesem Sinne sind auch Hydrazin, Hydrazinhydrat und substituierte Hydrazine zu betrachten, wie z.B. Methylhydrazin, N,N'-Dimethylhydrazin und deren Homologe sowie Säuredihydrazide, z.B. Carbodihydrazid, Oxalsäuredihydrazid, die Dihydrazide von Malonsäure, Bernsteinsäure, Glutarsäure, Adipinsäure, β-Methyladipinsäure, Sebacinsäure, Hydracrylsäure und Terephthalsäure, Semicarbazidoalkylenhydrazide, wie z.B. β-Semicarbazidopropionsäurehydrazid, Semicarbazidoalkylencarbazinester, wie z.B. 2-Semicarbazidoethylcarbazinester oder auch Aminosemicarbazid-Verbindungen, wie z.B. β-Aminoethylsemicarbazidocarbonat.

Weitere NCO-reaktive Verbindungen der Komponente C) sind die in der Polyurethanchemie üblichen OH-, SH- und/oder NH-terminierten Polyester oder Polycarbonate mit einem als Zahlenmittel bestimmten mittleren Molekulargewicht von 500 bis 100000 g/mol wie beispielsweise einfache Polyesterdiole, hergestellt durch Umsetzung von Adipinsäure, Terephthalsäure oder Phthalsäure mit überschüssigen Mengen an Alkandiolen wie Ethylenglykol, Tetramethylenglykol oder Hexamethylenglykol.

Als NCO-Blockierungsmittel wird 1-H-Pyrazol oder dessen Derivate mit der folgenden allgemeinen Formel verwendet: 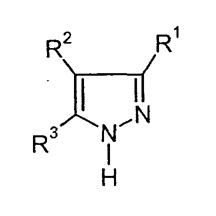 wobei
R¹, R² und R³ gleich oder verschieden sind
und
beispielsweise
- H: geradkettiges oder verzweigtes C₁-C₅-Alkyl, C₅-C₁₂-Cycloalkyl, Aryl, Arylalkyl, Pyridinyl, Halogen, -CN, -NO₂, C₁-C₅-Alkyloxy, -CHO, -COOH, -CONH₂, -CONHNH₂, C₁-C₅-Alkyloxycarbonyl sein können.

Des Weiteren können mit (substituierten) aromatischen Resten annellierte Pyrazole wie beispielsweise Benzopyrazol als NCO-Blockierungsmittel Verwendung finden.

Bevorzugt kommen mit Methylgruppen substituierte 1-H-Pyrazole wie beispielsweise 3-Methylpyrazol, 5-Methylpyrazol oder 3,5-Dimethylpyrazol als Blockierungsmittel zur Herstellung der NCO-haltigen Prepolymere in Frage.

Besonders bevorzugt sind mit 3,5-Dimethylpyrazol blockierte NCO-haltigen Prepolymere aus:
A) aromatischen Polyisocyanate aus Toluylendiisocyanat und Trimethylolpropan
B) Sulfonatdiolen
C) Ethylenoxid/Propylenoxid-Polyether.

Die Erfindung betrifft weiterhin ein Verfahren zur Herstellung der erfindungsgemäßen blockierten NCO-haltigen Umsetzungsprodukte, das dadurch gekennzeichnet ist, dass das aromatische Polyisocyanat A) mit der Komponente B), dem Blockierungsmittel 1-H-Pyrazol oder dessen Derivat und gegebenenfalls C) gleichzeitig oder in beliebiger Reihenfolge nacheinander umgesetzt wird. Besonders bevorzugt ist es, die Komponenten A), B), Blockierungsmittel und gegebenenfalls C) bei Raumtemperatur zu mischen und anschließend auf die Reaktionstemperatur aufzuheizen. Bevorzugt wird dabei eine Reaktionstemperatur zwischen 50 bis 120°C, insbesondere 65-90°C.

Gegebenenfalls können dem Reaktionsgemisch aus der Polyurethanchemie an sich bekannten Katalysatoren, wie beispielsweise metallorganische Verbindungen wie Zinn-(II)-octoat, Dibutylzinn-(II)-diacetat, Dibutylzinn-(II)-dilaurat oder tertiäre Amine wie Triethylamin oder Diazabicyclooctan zugesetzt werden.

Obwohl es oft von besonderem Vorteil ist, auf organische Lösungsmittel völlig zu verzichten, können bei der Herstellung der erfindungsgemäßen blockierten Polyisocyanate natürlich auch organische Lösungsmittel eingesetzt werden. Im Falle hochviskoser oder fester erfindungsgemäßer blockierter NCO-haltiger Umsetzungsprodukte ist die Mitverwendung organischer Lösungsmittel regelmäßig angebracht.

Bevorzugte organische Lösungsmittel umfassen unter anderem Ketone wie Aceton, Methylethylketon und Cyclohexanon, Ether wie Diethyl- und Dibutylether, Tetrahydrofuran und Dioxan, Ether und/oder Ester von Ethylenglykol und Propylenglykol wie Ethylenglykolmonomethyl- und -monoethylether, Ethylenglykolmonomethyl- und -monoethyletheracetat, Propylenglykoldiacetat, Ether und/oder Ester von Di- oder höheren Ethylenglykolen bzw. Di- oder höheren Propylenglykolen, C₂-C₄-Carbonsäure-C₁-C₆-alkylester wie Essigsäureethyl- und -butylester, Amide wie N,N-Dimethylformamid, N,N-Dimethylacetamid und N-Methylpyrrolidon, Sulfolan, N-Methyl-caprolactam, Benzin, Aromaten wie Benzol, Toluol und Xylole. Die Verwendung organischer Lösungsmittel, die NCO-reaktive Gruppen enthalten, wie z.B. Methanol, Ethanol, n- oder Isopropanol, im Laufe der Herstellung der erfindungsgemäßen blockierten Polyisocyanate wird nicht empfohlen. Die organischen Lösungsmittel können, falls gewünscht, aus den erfindungsgemäßen blockierten NCO-haltigen Umsetzungsprodukten wieder entfernt werden, z.B. durch Destillation.

Die erfindungsgemäßen blockierten NCO-haltigen Umsetzungsprodukte eignen sich hervorragend zur Herstellung wässriger Dispersionen. Sie finden auch bevorzugt in dieser Form Verwendung. Der Gehalt dieser wässrigen Dispersionen an erfindungsgemäßen blockierten NCO-haltigen Umsetzungsprodukten kann innerhalb weiter Grenzen schwanken und beträgt in der Regel 20 bis 80 Gew.-%, vorzugsweise 25 bis 50 Gew.-%. Das Dispergieren der erfindungsgemäßen blockierten NCO-haltigen Umsetzungsprodukte kann durch Zugabe von Wasser zum blockierten NCO-Umsetzungsprodukt erfolgen, oder das blockierte NCO-Umsetzungsprodukt kann in eine Wasservorlage gegeben werden.

Die Vereinigung der beiden Phasen erfolgt vorzugsweise durch Eintragen von Energie in die Mischung der Phasen. Dies kann beispielsweise geschehen durch:
a) Schütteln, Schlagen, Rühren oder turbulentes Mischen
b) Einspritzen einer Phase in die andere
c) Schwingungen u. Kavitation in der Mischung (z.B. Ultraschall)
d) Emulgierzentrifugen
e) Kolloidmühlen und Homogenisatoren.

Die genannten Methoden können auch kombiniert werden. So kann beispielsweise eine Vordispergierung unter Rühren erfolgen und anschließend eine Feindispergierung mit Homogenisatoren.

Bevorzugt erfolgt die Herstellung der Dispersionen durch Zugabe von Wasser zu den blockierten NCO-haltigen Umsetzungsprodukten unter Rühren.

Der Dispergiervorgang kann in Abwesenheit oder in Gegenwart organischer, vorzugsweise wassermischbarer, Lösungsmittel erfolgen. Als solche organischen Lösungsmittel eignen sich die oben genannten Lösungsmittel und zusätzlich auch jene Verbindungen, die als Lösungsmittel wirken können und NCO-reaktive Gruppen tragen, wie z.B. Alkohole wie Methanol, Ethanol, n- und Isopropanol. Die Verwendung - vorzugsweise wassermischbarer - organischer Lösungsmittel wird besonders dann bevorzugt, wenn die wässrige Dispersion mehr als 50 Gew.-% erfindungsgemäßes blockiertes NCO-Umsetzungsprodukt enthalten soll. So kann man beispielsweise nach dem letzten Reaktionsschritt das erfindungsgemäße blockierte NCO-Umsetzungsprodukt in einem wasserverdünnbaren organischen Lösungsmittel wie Isopropanol bis zu einem Gehalt an erfindungsgemäßen blockierten NCO-haltigen Umsetzungsprodukten von 80 bis 95 Gew.-%, bezogen auf die Summe von organischem Lösungsmittel und erfindungsgemäßem blockiertem NCO-Umsetzungsprodukt lösen. Die erhaltene organische Lösung lässt sich dann mit Wasser weiter verdünnen.

Die Temperatur beim Dispergieren beträgt im allgemeinen 10 bis 100°C, vorzugsweise 30 bis 80°C.

Die Dispergierung der blockierten NCO-haltigen Umsetzungsprodukte mit Wasser kann durch übliche Emulgatoren oder Dispergiermittel verbessert werden. Geeignet sind beispielsweise:

Alkylbenzolsulfonate, Alkansulfonate, Olefinsulfonate, Alkyl-(aryl-)polyalkylenglykolethersulfonate, Estersulfonate, Sulfosuccinate, Ricinusölsulfonate, Alkylsulfate, Alkylpolyalkylenglycolethersulfate, Alkyl-(aryl-)polyalkylenglykolethercarboxylate, Alkyl-(aryl)-phosphorsäureester, Alkyl-(aryl)-polyalkylenglycoletherphosphorsäureester, Glyceridsulfate, Acylisothionate, Acyltaurine, Acylsarkosinate, Alkyl-(aryl-)polyalkylenglycolether, endgruppenverschlossene Alkyl-(aryl-)polyalkylenglycolether, Phenolpolyalkylenglycolether, Acylalkanolamidpolyalkylenglykolether, alkoxylierte Butindiolderivate, Acylpolyalkylenglycolester, Alkylaminpolyalkylenglycolether, Ethylenoxid-Proylenoxid-Blockcopolymere, Alkylpolyglycoside, Acylglucamide, (ethoxylierte) Sorbitanester, quarternierte Alkylamine, Alkylaminoxide, Alkylbetaine, Alkylamidobetaine, Imidazoliniumbetaine, Sulfobetaine.

Als Dispergiermittel seien beispielsweise genannt: Polyasparaginsäuren, n-Alkylpolyasparaginsäuren, Ligninsulfonate, Carboxymethylcellulosen, Hydroxyethylcellulosen, Hydroxypropylcellulosen, modifizierte Stärken, Polyacrylsäuren, Maleinsäure/Acrylsäure-Copolymerisate, Maleinsäure/Olefin-Copolymerisate, Polyvinylalkohol, Polyvinylpyrrolidon, Vinylpyrralidon/Vinylacetat-Copolymerisate, Vinylpyrrolidon/Vinylimidazol-Copolymerisate, Vinylpyrrolidon/Acrylat-Copolymerisate, Vinylpyrrolidon/Vinylcaprolactam-Copolymerisate.

Bevorzugt eignen sich Alkylpolyalkylenglycolether, wie sie durch Umsetzung von Fettalkoholen mit Ethylenoxid erhalten werden.

Die als "Kettenverlängerungsmittel" beschriebenen Verbindungen können entweder vor, oder insbesondere bei Aminogruppen enthaltenden Substanzen, nach der Wasserdispergierung der blockierten Polyisocyanate zugesetzt werden.

Die erhaltenen wässrigen Dispersionen enthalten die erfindungsgemäßen blockierten NCO-haltigen Umsetzungsprodukte im allgemeinen als Teilchen mit einem mittleren Durchmesser von 50 bis 2000 nm, vorzugsweise 80 bis 300 nm.

Die erfindungsgemäßen blockierten NCO-haltigen Umsetzungsprodukte können, bevorzugt in Form ihrer wässrigen Dispersionen, beispielsweise zur Behandlung von Textilien, Papier oder Leder verwendet werden.

Die Erfindung betrifft daher ebenfalls Präparationen enthaltend
a) erfindungsgemäßes blockiertes NCO-Umsetzungsprodukt und
b) wenigstens einen Emulgator und/oder Dispergator.

In einer bevorzugten Ausführungsform beträgt die Menge an b) in der Präparation 1 bis 10 Gew.-%, bezogen auf das erfindungsgemäße blockierte NCO-Umsetzungsprodukt. Ebenfalls bevorzugt ist es, dass die Präparation als wässrige Dispersion vorliegt mit einem Gehalt der Gesamtmenge von a) und b) von gemeinsam 5 bis 50 Gew.-%, bezogen auf die Präparation.

In diesem Zusammenhang lassen sie sich beispielsweise in Kombination mit fluorierten organischen Verbindungen zur Hydro-/Oleophob- bzw. Antistain-Ausrüstung von Textilien verwenden. Von modernen Textilmaterialien, die z.B. als Möbelbezugsstoffe, Markisen oder als textiler Bodenbelag Verwendung finden, erwartet der Verbraucher günstige Eigenschaften in Hinblick auf ihre mechanische Beanspruchbarkeit, also ihre statische und dynamische Belastbarkeit und eine Unempfindlichkeit gegen Wasser, Öl und/oder Schmutz.

Schmutzsubstanzen können von z.B. folgender Zusammensetzung und Konsistenz sein: Öl und ölenthaltende Substanzen, flüssige, wässrige angefärbte Substanzen, anorganische trockene pigmentartige Substanzen (z.B. Straßenstaub), wässrige Suspensionen derselben und Mischungen der genannten Substanzen.

Das Prinzip einer Schutzausrüstung besteht darin, dass durch das Ausrüstungsmittel den Textilien hydrophobe und oleophobe Eigenschaften verliehen werden, die das Einsinken von flüssigen Verschmutzungen verhindern. Trockenschmutz haftet nicht an den Fasern und kann z.B. durch Staubsaugen leicht entfernt werden.

Eine weitere, oft geforderte Eigenschaft von Textilien, insbesondere bei Verwendung im Außenbereich, ist die Fähigkeit zur Wasserabweisung bei gleichzeitig hohem Tragekomfort des Textils.

Eine bedeutende Klasse solcher Hydrophobier- und/oder Oleophobiermittel für Textilausrüstungen stellen perfluorierte organischen Verbindungen dar, die meist in Form von Polymerdispersionen Verwendung finden. Es hat sich nun gezeigt, dass Mittel enthaltend solche fluorierten Hydrophobier-/Oleophobiermittel und erfindungsgemäße blockierte NCO-haltige Umsetzungsprodukte den mit diesen Mitteln ausgerüsteten Textilien überraschenderweise eine wünschenswerte Kombination überragender Eigenschaften verleihen. Insbesondere konnte gegenüber dem Stand der Technik die Waschpermanenz der Ausrüstung erfreulich verbessert werden. Auch zeigen die erfindungsgemäßen Produkte eine niedrigere Vergilbungsneigung.

Eine weitere Verwendungsmöglichkeit für die erfindungsgemäßen Produkte ist die Knitterfestausrüstung von Textilmaterialien aus natürlicher oder regenerierten Cellulose (Baumwolle, Viskose).

Textilien aus Cellulosefasern wie Baumwolle besitzen gegenüber synthetischen Fasern den Vorteil, hydrophil zu sein, was sich in hoher Feuchtigkeitsaufnahmefähigkeit und gutem Tragekomfort äußert. Ursache für die hohe Feuchtigkeitsaufnahmefähigkeit sind die quellbaren amorphen Bereiche der Cellulosefaser. Nachteilig ist allerdings die Tatsache, dass durch Waschen oder Schweiß gequollene Cellulose knittert und durch thermische und mechanische Behandlung wieder geglättet werden muss. Außerdem schrumpft Baumwolle beim Waschen, wodurch Textilien ihre ursprüngliche Form verlieren. Um diese Nachteile zu beseitigen, werden cellulosehaltige Fasern seit vielen Jahren mit Produkten behandelt, die durch Reaktion mit den Hydroxylgruppen der Cellulose die amorphen Teile der Faser zum Teil vernetzen. Bevorzugt werden als Vernetzer methylolisierte Harnstoff- oder Melaminderivate eingesetzt. Nachteilig bei diesen Verbindungen ist die Tatsache, dass sie bei der Ausrüstung und Benutzung des Textils Formaldehyd freisetzen können.

Der Einsatz unblockierter oder blockierter Polyisocyanate als Knitterfestmittel ist schon diskutiert worden. Die Anwendung dieser Produkte ist aber entweder auf Grund der mangelnden Flottenstabilität, hoher Vernetzungstemperatur oder schlechter Ausrüstungsparameter wie Knitter-und Schrumpfwerte, Griff oder Vergilbungsneigung bisher eingeschränkt.

Es hat sich gezeigt, dass die erfindungsgemäßen blockierten Polyisocyanate die Nachteile des Standes der Technik überwinden.

Bei der Knitterfreiausrüstung werden relativ hohe Mengen an Vernetzungsmittel verwendet, um die gewünschten Effekte zu erzielen. Da die erfindungsgemäßen Produkte nur eine geringe Vergilbungsneigung haben, können sie insbesondere bei Weißware vorteilhaft eingesetzt werden.

Um Textilien auszurüsten, werden sie mit einer wässrigen Flotte behandelt, die die erfindungsgemäßen Produkte als Vernetzer enthalten. Üblicherweise werden dabei die blockierten Polyisocyanate in Konzentrationen von 5 bis 100 g/l, bevorzugt 10 bis 50 g/l eingesetzt.

Des weiteren können die Flotten in der Textilindustrie übliche Produkte wie beispielsweise Weichmacher, Antistatika, Schiebefestmittel, Appreturmittel, Hydrophobiermittel, Oleophobiermittel, Flammschutzmittel, Entschäumer, Aufheller, Biozide sowie pH-Regulatoren enthalten. Durch den Einsatz der erfindungsgemäßen blockierten Polyisocyanate kann auch die Waschpermanenz der beschriebenen Produkte verbessert werden. Gegebenenfalls können die erfindungsgemäßen Produkte auch in Kombination mit handelsüblichen Vernetzern wie methylolisierten Harnstoff- oder Melaminderivaten eingesetzt werden.

Die Behandlung des Textilguts mit der Flotte kann dann nach dem Fachmann geläufigen Methoden wie Fouladieren, Sprühen, Pflatschen oder Schäumen erfolgen. Anschließend erfolgt eine Trockung des Textils bei Temperaturen von üblicherweise 100 - 120°C, wobei je nach verwendeter Faserart auf einen Restfeuchtegehalt von typischerweise 2 - 20 % getrocknet wird. Anschließend wird bei Temperaturen von 120 - 220°C, bevorzugt 130 - 180°C eine Wärmebehandlung durchgeführt. Die Schritte Trockung und Wärmebehandlung können auch in einer Stufe durchgeführt werden.

Des weiteren können die blockierte Polyisocyanate als Vernetzer im Textildruck verwendet werden. In der Textildruckindustrie werden Mischungen aus Bindemittel und Pigment unter Zusatz von reaktiven Verbindungen, wie z.B. formaldehydhaltigen Melaminderivaten vernetzt. Nachteilig ist hierbei, dass bei der Vernetzung der Druckpaste und vom bedruckten Textil Formaldehyd freigesetzt werden kann.

Es wurden daher Polyisocyanatverbindungen als formaldehydfreie Vernetzer entwickelt. Diese Produkte haben aber den Nachteil, entweder keine ausreichende Stabilität in den Druckpasten zu besitzen oder erst bei hohen Temperaturen zu vernetzen.

Die erfindungsgemäßen Produkte zeigen einerseits eine gute Stabilität in der Druckpaste und besitzen gleichzeitig eine niedrigere Deblockierungstemperatur.

Eine weitere Verwendungsmöglichkeit ist der Einsatz zur Filzfreiausrüstung von Wolle. Unbehandelte Wolle neigt beim Tragen und der Reinigung zur Verfilzung. Ursache hierfür ist im wesentlichen die Schuppenstruktur der Wolle, die dazu führt, dass sich die einzelnen Fasern untereinander verhaken. Trägt man die Schuppen durch chemische bzw. physikalische Verfahren ab oder maskiert sie mit Polymeren, so kann die Filzneigung der Wolle deutlich verringert werden. Oft werden auch beide Möglichkeiten miteinander kombiniert.

Isocyanate oder Isocyanatprepolymere sind dabei als Polymere bzw. polymerbildende Verbindungen gut zur Filzfreiausrüstung von Wolle geeignet. So werden beispielsweise in WO-A-99/10590 und den dort zitierten Stellen nicht blockierte Isocyanate für diesen Anwendungszweck beschrieben. Diese Isocyanate können entweder in organischen Lösemittel eingesetzt werden oder können aus wässrigen Flotten appliziert werden. Da Isocyanate mit Wasser reagieren, haben die Flotten aber nur eine begrenzte Standzeit. Außerdem führt die zur Wasserdispergierung notwendige Hydrophilierung der Isocyanate meist zu einer verringerten Wasch- und Reinigungsbeständigkeit der Ausrüstung.

In DE-A-23 07 563 und DE-A-24 39 056 werden mit Bisulfit blockierte Isocyanatprepolymere zur Filzfreiausrüstung von Wolle eingesetzt. Nachteilig ist aber bei diesen Produkten, dass bei der Anwendung Schwefeldioxid freigesetzt wird. Andere gängige Blockierungsmittel haben zu hohe Rückspalttemperaturen, bei der die temperaturempfindliche Wolle geschädigt würde.

Die erfindungsgemäßen Produkte zeigen diese Nachteile nicht. Sie besitzen in Wasser eine hervorragende Stabilität und gleichzeitig eine hohe Reaktivität.

### Beispiele:

### I Eingesetzte Ausgangsverbindungen:

### Aromatisches Polyisocyanat 1:

Erhältlich durch Umsetzung von Trimethylolpropan mit überschüssigem Toluoldiisocyanat und anschließendem Abdestillieren des überschüssigen Toluoldiisocyanats, als 75 %ige Lösung in Essigsäureethylester, NCO-Gehalt: 13,2 Gew.-%, beispielsweise Desmodur® L 75 (Bayer AG).

### Polyether 1:

Auf n-Butanol gestarteter monofunktioneller Ethylenoxid/Propylenoxid-Polyether (Gew.-Verhältnis EO:PO = 85:15) mit einem mittleren Molekulargewicht von 2250 g/mol und einer OH-Zahl von 25.

### Polyether 2:

Auf Propylenglycol gestarteter difunktioneller Propylenoxid-Polyether mit einem mittleren Molekulargewicht von 2000 g/mol und einer OH-Zahl von 56.

### Emulgator 1:

Fettalkoholpolyglykolether, erhältlich durch Addition von 10 mol Ethylenoxid an Lorol® technisch (Cognis).

### Polyethersulfonat

Durch Umsetzung von 2-Buten-1,4-diol mit Propylenoxid und Addition von Natriumhydrogensulfit erhältliches Produkt mit einem mittleren Molekulargewicht von 430 g/mol.

### AAS-Lösung

Natriumsalz der Aminoethyl-2-aminoethansulfonsäure (45 %ig in Wasser).

### Katalysator

Dibutylzinndilaurat, beispielsweise Desmorapid® Z (Bayer AG)

### II Herstellung der blockierten Polyisocyanate

### Beispiel 1:

Unter Rühren werden zu 137,9 g (0,4334 val) des aromatischen Polyisocyanats 1 nacheinander 23,3 g Ethylacetat, 21,3 g (0,0095 val) Polyether 1, 6,1 g (0,0284 val) Polyethersulfonat, 38,1 g (0,3963 val) 3,5-Dimethylpyrazol sowie 0,015 g Katalysator zugesetzt. Nach dem Aufheizen auf 85°C rührt man 3 Stunden bei dieser Temperatur weiter bis die NCO-Bande im IR-Spektrum nicht mehr nachweisbar ist. Man kühlt auf 50°C ab und tropft 395 g entmineralisiertes Wasser innerhalb von 10 Minuten hinzu. Anschließend wird das Lösungsmittel Ethylacetat im Vakuum abdestilliert. Man erhält eine Dispersion mit folgenden Kenndaten:

| | |
|---|---|
| mittl. Teilchengröße | 0,18 µm |
| Feststoffgehalt | 30 % |
| -SO₃Na/100 g | 2,52 mval |
| block. NCO/100 g | 2,95 % |

### Beispiel 2:

Unter Rühren werden zu 137,9 g (0,4334 val) des aromatischen Polyisocyanats 1 nacheinander 23,3 g Ethylacetat, 21,3 g (0,0095 val) Polyether 1, 17,5 g (0,0175 val) Polyether 2, 6,1 g (0,0284 val) Polyethersulfonat, 36,5 g (0,3797 val) 3,5-Dimethylpyrazol sowie 0,015 g Katalysator zugesetzt. Nach dem Aufheizen auf 85°C rührt man 3 Stunden bei dieser Temperatur weiter bis die NCO-Bande im IR-Spektrum nicht mehr nachweisbar ist. Man kühlt auf 50°C ab und tropft 430 g entmineralisiertes Wasser innerhalb von 10 Minuten hinzu. Anschließend wird das Lösungsmittel Ethylacetat im Vakuum abdestilliert. Man erhält eine Dispersion mit folgenden Kenndaten:

| | |
|---|---|
| mittl. Teilchengröße | 0,15 µm |
| Feststoffgehalt | 30 % |
| -SO₃Na/100 g | 2,31 mval |
| block. NCO/100 g | 2,59 % |

### Beispiel 3:

Unter Rühren werden zu 137,9 g (0,4334 val) des aromatischen Polyisocyanats 1 nacheinander 23,3 g Ethylacetat, 21,3 g (0,0095 val) Polyether 1, 17,5 g (0,0175 val) Polyether 2, 36,5 g (0,3797 val) 3,5-Dimethylpyrazol sowie 0,015 g Katalysator zugesetzt. Nach dem Aufheizen auf 85°C rührt man 3 Stunden bei dieser Temperatur weiter, kühlt auf 50°C ab und gibt 5,9 g (0,0279 val) AAS-Lösung hinzu. Nach einer Nachrührzeit von 10 Minuten ist im IR-Spektrum keine NCO-Bande mehr nachweisbar. Unter Rühren werden 420 g entmineralisiertes Wasser innerhalb von 10 Minuten zugetropft. Anschließend wird das Lösungsmittel Ethylacetat im Vakuum abdestilliert. Man erhält eine Dispersion mit folgenden Kenndaten:

| | |
|---|---|
| mittl. Teilchengröße | 0,16 µm |
| Feststoffgehalt | 30 % |
| -SO₃Na/100 g | 2,31 mval |
| block. NCO/100 g | 2,64 % |

### Beispiel 4:

Unter Rühren werden zu 137,9 g (0,4334 val) des aromatischen Polyisocyanats 1 nacheinander 23,3 g Ethylacetat, 17,5 g (0,0175 val) Polyether 2, 6,1 g (0,0284 val) Polyethersulfonat, 37,3 g (0,3880 val) 3,5-Dimethylpyrazol sowie 0,015 g Katalysator zugesetzt. Nach dem Aufheizen auf 85°C rührt man 3 Stunden bei dieser Temperatur weiter bis die NCO-Bande im IR-Spektrum nicht mehr nachweisbar ist. Man kühlt auf 50°C ab, setzt 21,3 g Emulgator 1 zu und tropft 433 g entmineralisiertes Wasser innerhalb von 10 Minuten hinzu. Anschließend wird das Lösungsmittel Ethylacetat im Vakuum abdestilliert. Man erhält eine Dispersion mit folgenden Kenndaten:

| | |
|---|---|
| mittl. Teilchengröße | 0,14 µm |
| Feststoffgehalt | 30 % |
| -SO₃Na/100 g | 2,29 mval |
| block. NCO/100 g | 2,63 % |

### Beispiel 5:

Unter Rühren werden zu 137,9 g (0,4334 val) des aromatischen Polyisocyanats 1 nacheinander 23,3 g Ethylacetat, 17,5 g (0,0175 val) Polyether 2, 21,4 g (0,0995 val) Polyethersulfonat, 30,4 g (0,3162 val) 3,5-Dimethylpyrazol sowie 0,015 g Katalysator zugesetzt. Nach dem Aufheizen auf 85°C rührt man 3 Stunden bei dieser Temperatur weiter bis die NCO-Bande im IR-Spektrum nicht mehr nachweisbar ist. Man kühlt auf 50°C ab und tropft 452 g entmineralisiertes Wasser innerhalb von 10 Minuten hinzu. Anschließend wird das Lösungsmittel Ethylacetat im Vakuum abdestilliert. Man erhält eine Dispersion mit folgenden Kenndaten:

| | |
|---|---|
| mittl. Teilchengröße | 0,11 µm |
| Feststoffgehalt | 30 % |
| -SO₃Na/100 g | 7,70 mval |
| block. NCO/100 g | 2,06 % |

### Beispiel 6:

Unter Rühren werden zu 137,9 g (0,4334 val) des aromatischen Polyisocyanats 1 nacheinander 23,3 g Ethylacetat, 17,5 g (0,0175 val) Polyether 2, 34,5 g (0,3589 val) 3,5-Dimethylpyrazol sowie 0,015 g Katalysator zugesetzt. Nach dem Aufheizen auf 85°C rührt man 3 Stunden bei dieser Temperatur; gibt 3,4 g (0,0571 val) Diethanolmethylamin hinzu, rührt eine weitere Stunde bis die NCO-Bande im IR-Spektrum nicht mehr nachweisbar ist. Man kühlt auf 50°C ab, fügt 3,6 g (0,029 mol) Dimethylsulfat zu und rührt weitere 2 Stunden, setzt 21,3 g Emulgator 1 zu und tropft 429 g entmineralisiertes Wasser innerhalb von 10 Minuten hinzu. Anschließend wird das Lösungsmittel Ethylacetat im Vakuum abdestilliert. Man erhält eine Dispersion mit folgenden Kenndaten:

| | |
|---|---|
| mittl. Teilchengröße | 0,20 µm |
| Feststoffgehalt | 30 % |
| N⁺/100 g | 4,66 mval |
| block. NCO/100 g | 2,46 % |

### Beispiel 7:

Unter Rühren werden zu 137,9 g (0,4334 val) des aromatischen Polyisocyanats 1 nacheinander 23,3 g Ethylacetat, 17,5 g (0,0175 val) Polyether 2, 37,3 g (0,3880 val) 3,5-Dimethylpyrazol sowie 0,015 g Katalysator zugesetzt. Nach dem Aufheizen auf 85°C rührt man 3 Stunden bei dieser Temperatur; gibt 3,4 g (0,0571 val) Diethanolmethylamin hinzu, rührt eine weitere Stunde bis die NCO-Bande im IR-Spektrum nicht mehr nachweisbar ist. Man kühlt auf 50°C ab, fügt 2,56 g (0,028 mol) Milchsäure sowie 21,3 g Emulgator 1 zu und tropft 426 g entmineralisiertes Wasser innerhalb von 10 Minuten hinzu. Anschließend wird das Lösungsmittel Ethylacetat im Vakuum abdestilliert. Man erhält eine Dispersion mit folgenden Kenndaten:

| | |
|---|---|
| mittl. Teilchengröße | 0,23 µm |
| Feststoffgehalt | 30 % |
| N⁺/100 g | 4,69 mval |
| block. NCO/100 g | 2,48 % |

### III Verwendung der blockierten Polyisocyanat-Dispersionen zur Hydrophob-/Oleophobausrüstung von Textilien

Um die gute Wirksamkeit der erfindungsgemäßen Produkte zu demonstrieren, wurde das Produkt aus Beispiel 1 (im folgenden Ausrüstung 1 genannt) in Kombination mit weiteren Komponenten zur Hydrophob-/Oleophobausrüstung von verschiedenen Geweben eingesetzt. Als weitere Komponenten werden zusätzlich folgende Produkte verwendet:
- DMDHEU:: 55 %ige wässrige Lösung v. Dimethyloldihydroxylethylenharnstoff
- Baygard® AFF:: Fluoralkyl-Acrylat-Copolymer (Bayer AG).

Zum Vergleich wird ein Butanonoxim geblocktes Isocyanat eingesetzt, das bis auf das Blockierungsmittel dem Beispiel 1 entspricht (vgl. Beispiel 2 aus EP-A 0 537 578) (im folgenden Ausrüstung 2 genannt).

Die Qualität der Ausrüstung wird nach folgenden Verfahren bestimmt:
1. Bestimmung der wasserabweisenden Eigenschaften von Flächengebilden mittels der Beregnungsprüfung nach Bundesmann (EN 29865) mit folgenden Parametern:
   - Abperlzeit [min]
   - Abperleffekt (Note 5-1)
   - Wasseraufnahme [%]
2. Ölabweisung nach AATCC 118-1997 (Ölnote 8-1)
3. Spray-Test nach AATCC 22-1996 (Note 100-0)
4. Weißgrad CIE
5. Zur Bestimmung der Waschpermanenz der Ausrüstung werden die Proben nach EN 26330, Verfahren 5 A gewaschen und nach Verfahren E (Trommeltrockner) getrocknet.

### Anwendungsbeispiel 1: PES/CO-Testgewebe

Ein Gewebe aus PES/CO-Mischgarn (67/33) von ca. 160 g/m² wird mit den in der Tabelle aufgeführten Flotten imprägniert, auf dem Foulard auf eine Flottenaufnahme von ca. 70 % abgequetscht, bei 110°C getrocknet und anschließend 5 Minuten bei 150°C kondensiert.

### Zusammensetzung der Flotte in g/l:

| **Ausrüstung** | **1** | **2** |
|---|---|---|
| Essigsäure 60 % | 1 | 1 |
| DMDHEU (ca. 55 %) | 40 | 40 |
| Zinknitrat | 3 | 3 |
| Baygard AFF | 50 | 50 |
| Produkt aus Bsp. 1 | 15 | |
| Vergleichsprod. | | 15 |

### Messwerte nach Ausrüstung

| **Messwerte nach Ausrüstung** | | | **Messwerte nach 3 Wäschen/Trockner** | |
|---|---|---|---|---|
| **Ausrüstung** | **1** | **2** | **1** | **2** |
| Zeit [min] | 10 | 10 | 10 | 10 |
| Note | 6 | 5 | 5 | 5 |
| Wasseraufnahme [%] | 2,1 | 4,1 | 11,9 | 15,6 |
| Öl-Note | 6 | 5 | 5 | 4 |
| Spray-Test | 100 | 100 | 100 | 100 |
| Weißgrad CIE | 138,2 | 135,9 | 138,0 | 134,7 |

### Anwendungsbeispiel 2: Polyamid PA-Testgewebe

Ein Gewebe aus Polyamid von ca. 150 g/m² wird mit den in der Tabelle aufgeführten Flotten imprägniert, auf dem Foulard auf eine Flottenaufnahme von ca. 55 % abgequetscht, bei 110°C getrocknet und anschließend 5 Minuten bei 150°C kondensiert.

### Zusammensetzung der Flotte in g/l:

| **Ausrüstung** | **1** | **2** |
|---|---|---|
| Essigsäure 60 % | 1 | 1 |
| Baygard AFF | 40 | 40 |
| Produkt aus Bsp. 1 | 8 | |
| Vergleichsprod. | | 8 |

| **Messwerte nach Ausrüstung** | | | **Messwerte nach 3 Wäschen/Trockner** | |
|---|---|---|---|---|
| **Ausrüstung** | **1** | **2** | **1** | **2** |
| Zeit [min] | 10 | 10 | 10 | 10 |
| Note | 4 | 4 | 4 | 4 |
| Wasseraufnahme [%] | 1,2 | 3,1 | 5,7 | 6,7 |
| Öl-Note | 4 | 3 | 3 | 2 |
| Spray-Test | 100 | 100 | 100 | 100 |

### Anwendungsbeispiel 3: PES-Testgewebe

Ein Gewebe aus PES von ca. 155 g/m² wird mit der Flotte gemäß Anwendungsbeispiel 2 imprägniert, auf dem Foulard auf eine Flottenaufnahme von ca. 60 % abgequetscht, bei 110°C getrocknet und anschließend 5 Minuten bei 150°C kondensiert.

| **Messwerte nach Ausrüstung** | | | **Messwerte nach 3 Wäschen/Trockner** | |
|---|---|---|---|---|
| **Ausrüstung** | **1** | **2** | **1** | **2** |
| Zeit [min] | 10 | 10 | 10 | 10 |
| Note | 5 | 5 | 5 | 5 |
| Wasseraufnahme [%] | 0 | 0 | 0 | 0 |
| Öl-Note | 6 | 6 | 6 | 5 |
| Spray-Test | 100 | 100 | 100 | 100 |

### Ergebnisse Hydrophob-/Oleophobausrüstung von Textilien:

Die erfindungsgemäßen Polyisocyanat-Dispersionen zeigen gegenüber dem Stand der Technik deutlich verbesserte Eigenschaften.

So liegen die Weißgrade gegenüber Produkten, die dem Stand der Technik entsprechen, erfreulicherweise höher.

Darüber liefern die erfindungsgemäßen Produkte verbesserte Wirksamkeiten bei der Hydrophob- bzw. Oleophobausrüstung von unterschiedlichen Geweben. Dadurch kann die Menge an perfluorierten Verbindungen zur Erzielung der Hydrophob- bzw. Oleophobeffekte reduziert werden.

### IV Verwendungsbeispiele der blockierten Polyisocyanat-Dispersionen Knitter- und Schrumpffrei-Ausrüstung von Textilien

Baumwolle (100 %ige Baumwolle mit einem Flächengewicht von 110 g/m²) wird zunächst in die Ausrüstungsflotten getaucht und anschließend auf einem Foulard auf eine Flottenaufnahme von 70-85 % abgequetscht. Das so präparierte Textil wird auf einem Spannrahmen 10 Minuten bei 120°C getrocknet und 5 Minuten bei 140°C kondensiert. Daneben wird eine unbehandelte Probe zum Vergleich verwendet (Ausrüstung 0).

Bestimmt werden der Knittererholungswinkel nach DIN 53890, die Maßänderung nach DIN 53892 sowie das Selbstglättungsverhalten nach der Wäsche nach DIN 53895. Zur Bestimmung der Maßänderung bzw. des Selbstglättungsverhalten wurden die Proben nach DIN 53920, Verfahren 3 A, gewaschen.

Das erfindungsgemäße Produkt gemäß Beispiel 1 ist in der Ausrüstungsflotte 1 enthalten.

Zum Vergleich wird Beispiel 2 aus EP 0537578 nachgearbeitet (Ausrüstung 2) sowie ein handelsüblicher, formaldehydhaltiger Vernetzer (DMDHEU, 55 %ige wässrige Lösung v. Dimethyloldihydroxylethylenharnstoff, Ausrüstung 3) eingesetzt.

### Zusammensetzung der Ausrüstungsflotte 1 in g/l:

| **Ausrüstung** | **1** | **2** | **3** |
|---|---|---|---|
| Produkt Bsp. 1 | 130 | | |
| Vergleichsprod. | | 130 | |
| Essigsäure 60 % | | | 1 |
| DMDHEU | | | 60 |
| MgCl₂ | | | 15 |

### Messwerte nach Ausrüstung

| **Ausrüstung** | **1** | **2** | **3** | **0** |
|---|---|---|---|---|
| Knittererholungswinkel K+S nach DIN 53890 | 132 | 135 | 133 | 87 |
| Maßänderung K+S nach DIN 53892 in % | -1,0 | -1,1 | -1,1 | -3,1 |
| Selbstglättungsnote nach DIN 53895 | 3,4 | 3,2 | 3,2 | 1 |
| Weißgrad CIE | 141,1 | 139,9 | 137,7 | 142,1 |

Die Beispiele zeigen, dass die erfindungsgemäßen Produkte gut zur Knitter-und Schrumpffrei-Ausrüstung von Textilien geeignet sind. Überraschend ist die Verbesserung des Weißgrads gegenüber dem Stand der Technik.

### V Verwendungsbeispiele der blockierten Polyisocyanat-Dispersionen als Vernetzer im Textildruck

Die blockierte Polyisocyanat-Dispersion gemäß Beispiel 1 wird als Vernetzer im Textildruck eingesetzt (Druckpaste 1).

Zum Vergleich wird Vernetzer 3 aus DE-A-4433437 nachgearbeitet (Druckpaste 2).
Verwendete Produkte:
- Acraconz® BN:: Synthetisches Verdickungsmittel auf Acrylat-Basis (Bayer AG)
- Emulgator VA:: Dispergiermittel auf Polyurethan-Polyethylenglycol-Basis (Bayer AG)
- Emulgator® WN:: Emulgator u. Dispergiermittel, Arylpolyglycolether (Bayer AG)
- Respumit 3300:: Entschäumer auf Mineralöl-Basis (Bayer AG)
- Acramin® Marineblau FBC 150 %:: Pigment auf Basis Cu-Phthalocyanin (Bayer AG)
- Acramin® ALW:: Dispersionsbinder auf Acrylat/Acrylnitril-Basis (Bayer AG)

Gedruckt wurde auf PES-CO 50:50. Nach dem Trocknen bei 120°C wurde 8 Minuten bei 150°C fixiert.

### Zusammensetzung der Druckpasten in g/l:

| | **1** | **2** |
|---|---|---|
| Acraconz® BN | 34 | 34 |
| Emulgator VA/WN 1:1 | 3 | 3 |
| Respumit® 3300 | 4 | 4 |
| Acramin® Marineblau FBC 150 % | 40 | 40 |
| Acramin® ALW | 120 | 120 |
| Produkt aus Bsp. 1 | 14 | |
| Vergleichsprod. | | 14 |

Die Qualität des Pigmentdruckes unter der Verwendung des erfindungsgemäßen Vernetzers zeigte im Vergleich mit dem Stand der Technik deutlich bessere Eigenschaften bei der sogenannten Bürstenwäsche, Reibechtheit trocken sowie Reibechtheit nass.

### VI Verwendungsbeispiele der blockierten Polyisocyanat-Dispersionen zur Filzfreiausrüstung von Wolle

Ein plasmabehandelter Wollkammzug (vgl. DE 19 616 776) wird mit einer Ausrüstungsflotte behandelt, auf einem Foulard abgequetscht, 20 Minuten bei 80°C getrocknet und anschließend 1,5 Minuten bei 140°C kondensiert.

Zum Vergleich wird ein mit Butanonoxim blockierter Vernetzer 3 aus DE-A-44 33 437 verwendet (Ausrüstung 2).

### Zusammensetzung der Ausrüstungsflotte in g/l:

| **Ausrüstung** | **1** | **2** |
|---|---|---|
| Essigsäure 60 % | 1 | 1 |
| Produkt aus Bsp. 1 | 60 | |
| Vergleichsprod. | | 60 |

Die Qualität der Filzfreibehandlung wird nach dem "Aachener Filzkugeltest" gemäß IWTO 20-69 bestimmt. Dazu wird eine Probe unter filzbildenden Bedingungen eine definierte Zeit lang (in allen Beispielen 1 h) mechanisch beansprucht. Je weniger sich die einzelnen Wollfasern untereinander verhaken, desto größer bleibt die untersuchte Kugel. Ist der Kugeldurchmesser nach der Beanspruchung größer 3,4 cm, so kann die behandelte Wolle als filzfrei bezeichnet werden.

### Messwerte nach Ausrüstung (Mittelwerte aus zwei Messungen)

| **Ausrüstung** | **1** | **2** |
|---|---|---|
| Filzkugeldurchmesser [cm] | 3,467 | 3,193 |

Die Beispiele zeigen, dass das erfindungsgemäße Produkt gut zur Filzfreiausrüstung von Wolle geeignet ist.

## Patentansprüche

1. Mit 1-H-Pyrazol oder dessen Derivaten blockierte NCO-haltige Umsetzungsprodukte aus
A) aromatischen Polyisocyanaten,
B) NCO-reaktiven Verbindungen enthaltend Sulfonat- und/oder tert.-Aminogruppen sowie
C) gegebenenfalls weitere von B) verschiedene NCO-reaktive Verbindungen.

2. Blockierte NCO-haltige Umsetzungsprodukte nach Anspruch 1, **dadurch gekennzeichnet, dass** die aromatischen Polyisocyanate A) ein mittleres Molekulargewicht von 500-5000 g/mol besitzen.

3. Blockierte NCO-haltige Umsetzungsprodukte nach Anspruch 1 oder 2, **dadurch gekennzeichnet, dass** die aromatischen Polyisocyanate A) einen NCO-Gehalt von 8-20 Gew.-% besitzen.

4. Blockierte NCO-haltige Umsetzungsprodukte nach Anspruch 1, **dadurch gekennzeichnet, dass** als Blockierungsmittel Dimethylpyrazolderivate, insbesondere 3,5-Dimethylpyrazol verwendet werden.

5. Blockierte NCO-haltige Umsetzungsprodukte nach einem oder mehreren der Ansprüche 1 bis 4, **dadurch gekennzeichnet, dass** die NCO-reaktiven Verbindungen B) Sulfonatgruppen besitzen.

6. Blockierte NCO-haltige Umsetzungsprodukte nach einem oder mehreren der Ansprüche 1 bis 5, **dadurch gekennzeichnet, dass** als weitere NCO-reaktive Verbindungen der Komponente C) polyoxalkylengruppenhaltige Verbindungen verwendet werden.

7. Verfahren zur Herstellung der blockierten NCO-haltigen Umsetzungsprodukte nach Anspruch 1, **dadurch gekennzeichnet, dass** die Komponenten A), B), Blockierungsmittel und gegebenenfalls C) gleichzeitig oder in beliebiger Reihenfolge miteinander umsetzt.

8. Präparationen enthaltend
a) blockiertes NCO-haltiges Umsetzungsprodukt gemäß Anspruch 1 und
b) wenigstens einen Emulgator und/oder Dispergator.

9. Verwendung der blockierten NCO-haltigen Umsetzungsprodukte nach einem oder mehreren der Ansprüche 1 bis 6 zur Behandlung von Textilien, Papier oder Leder.

10. Verwendung der blockierten NCO-haltigen Umsetzungsprodukte nach einem oder mehreren der Ansprüche 1 bis 6 in Kombination mit fluorierten organischen Verbindungen zur Hydro-/Oleophob- bzw. Antistain-Ausrüstung von Textilien.

11. Verwendung der blockierten NCO-haltigen Umsetzungsprodukte nach einem oder mehreren der Ansprüche 1 bis 6 in Kombination mit hydroxylgruppenfreien fluorierten organischen Verbindungen zur Hydro-/Oleophob- bzw. Antistain-Ausrüstung von Textilien.

12. Verwendung der blockierten NCO-haltigen Umsetzungsprodukte nach einem oder mehreren der Ansprüche 1 bis 6 zur Behandlung von Textilien, um die Knitter- und Schrumpfneigung der behandelten Textilien zu reduzieren.

13. Verwendung der blockierten NCO-haltigen Umsetzungsprodukte nach einem oder mehreren der Ansprüche 1 bis 6 als Vemetzer im Textildruck.

14. Verwendung der blockierten NCO-haltigen Umsetzungsprodukte nach einem oder mehreren der Ansprüche 1 bis 6 zur Filzfreiausrüstung von Wolle oder Wollmischgeweben.
